# EUROPÄISCHE PATENTSCHRIFT

(11) **EP 1 497 589 B1**
(45) Veröffentlichungstag und Bekanntmachung des Hinweises auf die Patenterteilung: **11.03.2015**
(21) Anmeldenummer: 03724871.3
(22) Anmeldetag: 22.04.2003
(51) Int. Cl.: F23C 99/00, F23R 3/42, F23C 9/00

(54) **BRENNKAMMER MIT FLAMMENLOSER OXIDATION**
COMBUSTION CHAMBER WITH FLAMELESS OXIDATION
CHAMBRE DE COMBUSTION AVEC OXYDATION SANS FLAMME

(30) Priorität: 23.04.2002 DE 10217913
(43) Veröffentlichungstag der Anmeldung: 19.01.2005
(73) Patentinhaber: WS-Wärmeprozesstechnik GmbH, 71272 Renningen (DE)
(72) Erfinder: WÜNNING, Joachim, G., 71229 Leonberg (DE); WÜNNING, Joachim, A., 71229 Leonberg (DE)
(74) Vertreter: Rüger, Barthelt & Abel
(86) Internationale Anmeldenummer: PCT/DE2003/001319
(87) Internationale Veröffentlichungsnummer: WO 2003/091626

(56) Entgegenhaltungen:
- EP-A- 0 698 764
- EP-A- 0 821 196
- WO-A-01/11215
- US-A- 3 309 866
- US-A- 5 154 599

## Beschreibung

Die Erfindung betrifft eine Brennkammer für eine Gasturbine und eine mit einer solchen Brennkammer ausgerüstete Gasturbine.

Gasturbinen dienen zur Umsetzung von Wärmeenergie in mechanische Energie, die beispielsweise an einer Welle (Kraftwerke, Schiffsantriebe, Hubschrauber) oder als Schub abgegeben wird (Flugzeuge). Alle Gasturbinen weisen Brennkammern auf, in denen ein Brennstoff mit Luftüberschuss verbrannt wird. Dabei bildet sich in der Brennkammer eine stabile Flamme aus. Zur Stabilisierung derselben wird die Gasströmung, die am Verdichterausgang eine sehr hohe Geschwindigkeit hat, meist zunächst verlangsamt. Es sind geeignete Mittel zur Ausbildung stabiler Flammen vorgesehen. Z.B. werden in der Brennkammer kleinräumige Wirbel zur Flammenstabilisierung erzeugt. Die Verbrennung erfolgt mit Luftüberschuss, um die Brennkammer und die Turbine thermisch nicht zu überlasten.

Aus der EP 0463218 B1 ist die flammenlose Oxidation eines Brennstoffs in einem entsprechenden Reaktionsraum bekannt. Die flammenlose Oxidation wird bei hohen Brennkammertemperaturen erreicht, wenn der Brennstoff in einen heißen abgas- und sauerstoffhaltigen Gasstrom eingeleitet wird.

Aus der US 3,309,866 ist eine Gasturbine bekannt, bei der das Brennstoff-Luft-Gemisch bereits vor der Kommpression gebildet wird und nach der Kommpression vom Verdichter der Brennkammer zugeführt wird. Das Gemisch wird in etwa tangential zu einer im Querschnitt zumindest teilweise Kreisförmigen Wand der Brennkammer ein- und an anderer Stelle wieder ausgeleitet. Alternativ ist es ebenfalls möglich, den Brennstoff direkt in den Brennraum einzuspritzen, jedoch ist keine konkrete konstruktive Ausgestaltung der Luft- und Brennstoffeinspritzung direkt in den Brennraum angegeben.

Brennkammern von Gasturbinen müssen mehreren Anforderungen genügen. Einige davon sind ein möglichst geringer Druckverlust, die Erzielung einer möglichst vollständigen Verbrennung, die (knappe) Unterschreitung maximaler Abgastemperaturen (zur Schonung der Turbine) und eine geringe Stickoxiderzeugung.

Daraus leitet sich die Aufgabe ab, eine Gasturbine mit einer Brennkammer zu schaffen, die eine niedrige Stickoxiderzeugung aufweist und sich zum Einsatz an Gasturbinen eignet.

Diese Aufgabe wird mit der Gasturbine gemäß Anspruch 1 gelöst:

Die erfindungsgemäße Brennkammer ist zur flammenlosen Oxidation eingerichtet. Dies wird erreicht, indem der Eingang und der Ausgang so ausgerichtet sind, dass sich in ihrem Innenraum eine großräumige Rezirkulationsströmung ausbildet, mit der der zugeführten Frischluft größere Mengen heißer Abgase beigemischt werden. Vorzugsweise sind die Verhältnisse so getroffen, dass dem Frischluftstrom wenigstens ein doppelt so großer Abgasstrom beigemischt wird. Damit kann erreicht werden dass das Gemisch aus Frischluft und Abgas eine Mischungstemperatur aufweist, die über der Entzündungstemperatur des Brennstoffs liegt. Die sich einstellende flammenlose Oxidation ist nicht auf die Ausbildung einer stabilen Flamme angewiesen. Es kann deshalb mit relativ hohen Gasgeschwindigkeiten gearbeitet werden, wobei sich die Oxidation des Brennstoffs über eine größere zwischen Eingang und Ausgang liegende Strecke erstreckt.

Die großräumige Rezirkulationsströmung lässt sich außerdem relativ verlustarm gestalten, so dass die Brennkammer einen geringen Strömungswiderstand hat und somit lediglich geringe Druckverluste verursacht. Es sind Druckverluste erreichbar, die lediglich im Bereich von weniger als 3 % des Brennkammerdrucks liegen. Die Frischluft wird der Brennkammer verdichtet und vorzugsweise drallfrei gewissermaßen als Luftstrahl zugeführt. Es ergibt eine geordnete Strömung.

Die neue Brennkammer ermöglicht hohe Leistungsdichten (z.B. 100 MW/m³). Flammenabriss sowie Flammenrückschlag sind prinzipbedingt unmöglich. Es sind NOₓ-Konzentrationen von unter 10 ppm erreicht worden.

Zur Ausbildung der flammenlosen Oxidation unter gleichzeitiger Erreichung eines niedrigen Durchströmungswiderstands der Brennkammer und einer kompakten Bauform wird der Brennstoff in der gleichen Richtung in die Brennkammer eingeleitet, wie die Frischluft. Dadurch werden lokale Wirbel weitgehend reduziert, die ansonsten zu einer Erhöhung des Druckverlusts beitragen könnten.

Es wird bevorzugt die Brennkammer mit einer inneren Rezirkulation von 2 bis 5 auszulegen. Dies bedeutet, dass der Frischluft das Zwei- bis Fünffache ihres Massenstroms an Abgasen beigemischt wird.

Die Luft und der Brennstoff werden dabei vorzugsweise zueinander koaxial, in benachbarten Strahlen oder in anderweitig nebeneinander und im Wesentlichen parallel zueinander angeordneten Strahlen in die Brennkammer eingeführt. Die Zuführung in die Brennkammer erfolgt vorzugsweise von der Stirnwand her an dem der äußeren Brennkammerwand benachbarten Bereich, d.h. in einer radial außen liegenden Zone der Stirnwand. Dadurch werden Frischluft und Brennstoff in einer zunächst im Wesentlichen wandparallelen Strömung in die Brennkammer eingeführt. Der Ausgang der Brennkammer ist vorzugsweise in der gleichen Richtung oder in Gegenrichtung orientiert, wobei seine Außengrenze einen geringeren Abstand zur Brennkammermittelachse aufweist als zu dem Eingang der Brennkammer gehörige Luftdüsen. Mit dieser Maßnahme lässt sich die großräumigere Rezirkulationsströmung erreichen, die vom Eingang zum Ausgang der Brennkammer an der Wand entlangführt und dann von dem Ausgang zu dem Eingang vorzugsweise auf der Mittelachse der Brennkammer zurückströmt.

Der Eingang der Brennkammer wird durch mehrere Lufteingangsdüsen gebildet, die die Frischluft als Frischluftstrahlen in den Innenraum leiten. Außerdem sind die Luftdüsen vorzugsweise so geformt, dass der austretende Luftstrahl eine Injektorwirkung zur Rücksaugung von Abgasen ausübt. Dies kann beispielsweise durch einen über die Stirnwand der Brennkammer vorstehenden kegelförmigen Abschnitt erreicht oder unterstützt werden.

Die Brennkammer kann zu einem Satz ringförmig angeordneter Einzelbrennkammern gehören, die auch als Rohrbrennkammern bezeichnet werden. Alternativ kann die Brennkammer als Ringbrennkammer ausgelegt sein. Bei stationären Anlagen sind auch abweichende Brennkammerformen möglich.

Die Brennkammer ist vorzugsweise so ausgebildet, dass sie lediglich ein einziges Zirkulationszentrum (Wirbelzentrum) aufweist. Bei der Rohrbrennkammer ist dieses Wirbelzentrum eine Linie oder Fläche, die koaxial zu der Brennkammerlängsachse angeordnet ist. Die Zirkulationsströmung ist eine Toroidströmung, die den gesamten Innenraum der Brennkammer erfasst. Bei der Ringbrennkammer, bei der die zum Eingang gehörigen Luftdüsen beispielsweise auf einem äußeren Kranz in der Stirnwand angeordnet sind, wird das Wirbelzentrum ebenfalls durch eine koaxial zu der Brennkammerlängsachse ausgerichtete Kreislinie gebildet. Diese ist vorzugsweise ungefähr parallel zu der Linie, auf der die Luftdüsen angeordnet sind.

Die Brennkammer ist vorzugsweise mit einer Vorheizeinrichtung versehen, mit der sie zu Betriebsbeginn auf eine zur flammenlosen Oxidation geeignete Temperatur gebracht werden kann. Die Vorheizeinrichtung wird beispielsweise durch zeitweilig betriebene Brenner gebildet, die eine Flamme ausbilden können, durch eine elektrische Heizung oder durch sonstige Wärmequellen.

Die Brennkammer kann an ihrer Innenwand mit einem katalytisch aktiven Material beschichtet sein. Außerdem kann in der Brennkammer ein Leitkörper mit katalytischer Oberfläche angeordnet sein. Weiter kann an dem Ausgang der Brennkammer ein Katalysator angeordnet werden.

Weitere vorteilhafte Einzelheiten von Ausführungsformen der Erfindung ergeben sich aus der Zeichnung, der Beschreibung oder Unteransprüchen.

In der Zeichnung sind Ausführungsbeispiele der Erfindung veranschaulicht. Es zeigen:
- Figur 1: eine Gasturbine in einer schematischen Darstellung,
- Figur 2: die Brennkammern der Gasturbine nach Figur 1 in einer Stirnansicht,
- Figur 3: eine einzelne Brennkammer in schematisierter, längsgeschnittener Darstellung,
- Figur 4: die Brennkammer nach Figur 3 in einer Stirnansicht,
- Figur 5: eine abgewandelte Ausführungsform der Brennkammer in längsgeschnittener Darstellung,
- Figur 6: eine weitere abgewandelte Ausführungsform der Brennkammer in längsgeschnittener Darstellung,
- Figur 7: eine als Ringbrennkammer ausgebildete Brennkammer in Stirnansicht,
- Figur 8: die Brennkammer nach Figur 7 im Längsschnitt,
- Figur 9: eine Brennkammer mit Umkehrströmung in längsgeschnittener Darstellung und
- Figur 10: die Brennkammer nach Figur 9 in Stirnansicht.

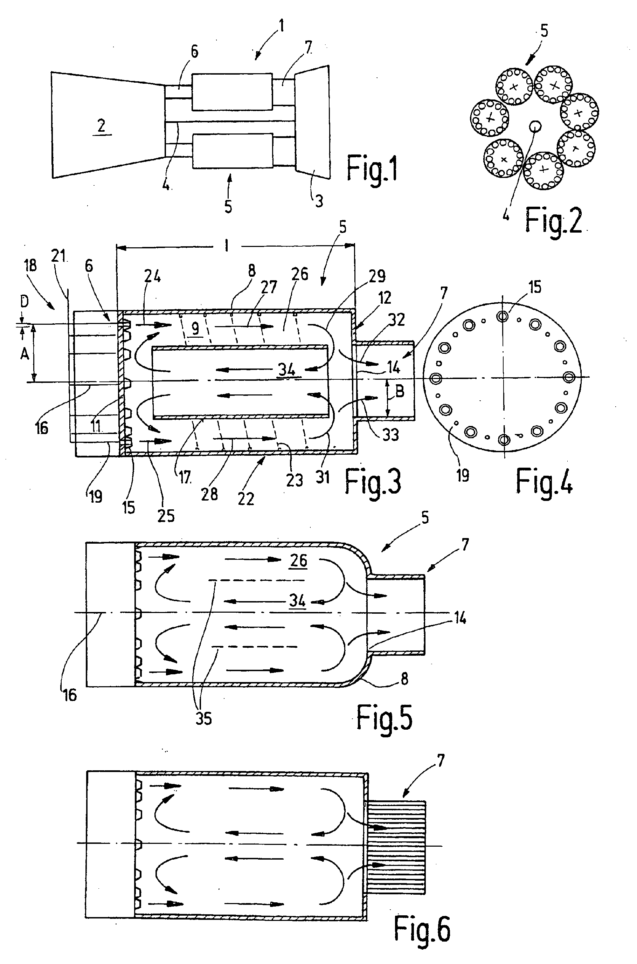

In Figur 1 ist eine Gasturbine 1 veranschaulicht, die einen Verdichter 2, eine Turbine 3, die mit dem Verdichter 2 beispielsweise über eine Welle 4 verbunden ist, und wenigstens eine Brennkammer 5 aufweist. Jede Brennkammer weist einen Eingang 6, der von dem Verdichter 2 mit verdichteter Luft gespeist ist, und einen Ausgang 7 auf, der der Turbine 3 den in der Brennkammer 5 erzeugten Gasstrom zuführt.

Die Brennkammern 5 können, wie Figur 2 veranschaulicht, jeweils etwa rohrförmige Einzelbrennkammern (can-type-burner) sein, die gemeinsam einen Brennkammersatz bilden. Eine einzelne solche Brennkammer 5 ist in Figur 3 veranschaulicht. Die Brennkammer weist einen von einer Wandung 8 umschlossenen Innenraum 9 auf, der im Wesentlichen zylindrisch ist. Zu der Wandung 8 gehört eingangsseitig eine Stirnwand 11, die beispielsweise eben ausgebildet sein kann. An der gegenüber liegenden Seite ist eine Stirnwand 12 ausgebildet, in der eine den Ausgang 7 festlegende Öffnung 14 mit dem Radius B angeordnet ist. Als Eingang 6 dient eine Reihe von Luftdüsen 15, die, wie Figur 4 veranschaulicht, auf einem Kreis angeordnet sind. Die Luftdüsen 15 sind dabei in der Nähe der Wandung 8 auf einem Radius A zu der gedachten Mittelachse 16 der Brennkammer 5 angeordnet, der größer ist als der Radius B der Öffnung 14. Bei einer praktisch erprobten Ausführungsform beträgt der Durchmesser D der jeweiligen Düsenöffnung der Luftdüsen 15 etwa ein Fünfzigstel der entlang der Mittelachse 16 gemessenen Länge l der Brennkammer 5. Der Durchmesser der Brennkammer beträgt etwa die Hälfte von deren Länge. Die Figuren sind nicht maßstäblich.

In dem Innenraum 9 kann ein Leitrohr 17 konzentrisch zu der Mittelachse 16 angeordnet sein. Das Leitrohr 17 ist kürzer als die Länge des Innenraums 9. Sein Durchmesser entspricht etwa dem Durchmesser der Öffnung 14. Zu den Stirnwänden 11 und 12 hält es jeweils einen Abstand, der etwas geringer ist als sein Radius. Mittel zur Befestigung des Leitrohrs 17, wie beispielsweise Stege zu der Wandung 8 oder den Stirnwänden 11, 12 sind nicht veranschaulicht.

Die Luftdüsen 15 ragen, wie Figur 3 veranschaulicht, in den Innenraum 9 hinein. Sie weisen beispielsweise eine etwa kegelstumpfförmige Kontur auf. Sie sind so ausgebildet, dass sie einen geraden Luftstrahl erzeugen, der einen Injektoreffekt bewirkt. Zur Zuführung von Brennstoff ist eine Brennstoffzuführungseinrichtung 18 vorgesehen. Diese wird beispielsweise durch Brennstoffdüsen 19 gebildet, die von einer zentralen Leitung 21 gespeist sind. Die Brenndüsen 19 können beispielsweise jeweils kurz vor einer Luftdüse 15 münden. Dabei kann jeder Luftdüse 15 eine Brennstoffdüse 19 zugeordnet sein. Es ist auch möglich, lediglich einigen der Luftdüsen 15 Brennstoffdüsen 19 zuzuordnen. Außerdem können die Brennstoffdüsen 19, wie in Figur 4 als Alternative veranschaulicht ist, zwischen den Luftdüsen 15 angeordnet sein. Die Zahl der Brennstoffdüsen 19 kann mit der Zahl der Luftdüsen 15 übereinstimmen oder von dieser abweichen. Die Brennstoffdüsen 19 und die Luftdüsen 15 haben die gleiche Ausströmungsrichtung, d.h. die Luft und der Brennstoff werden gleichgerichtet in den Innenraum 9 eingeleitet.

Die Brennkammer 5 weist zur Inbetriebnahme außerdem eine Vorwärmeinrichtung 22 auf. Diese wird im vorliegenden Ausführungsbeispiel durch eine Glühwendel gebildet, die elektrisch beheizbar und an der Innenseite der Wandung 8 untergebracht ist. Alternativ kann ein Brenner, eine Lichtbogenerzeugungseinrichtung oder eine anderweitige steuerbare Wärmequelle vorgesehen sein.

Die insoweit beschriebene Brennkammer 5 arbeitet wie folgt:

Bei Betrieb der Gasturbine 1 erhält die Brennkammer 5 an ihrem Eingang 6 verdichtete und durch die Verdichtung vorgewärmte Frischluft. Der Druck kann beispielsweise im Bereich von 10 bar bis 20 bar liegen. Die Luft teilt sich auf die einzelnen Luftdüsen 15 auf und tritt somit in Form von Strahlen etwa parallel zu der zylindrischen Wand 8 in den Innenraum 9 ein. Dies ist durch Pfeile 24, 25 veranschaulicht. Die Temperatur in dem Innenraum 9 ist beispielsweise mittels der Glühwendel 23 so erhöht worden, dass sich eingeleiteter Brennstoff entzündet. Dieser wird über die Brennstoffdüsen 19 mit dem Frischluftstrom in Richtung der Pfeile 24, 25 in den Innenraum 9 geleitet. Der Brennstoff reagiert nun in dem Innenraum auf dem Weg von den Luftdüsen 15 zu der Stirnwand 12. Somit bildet der zwischen der Außenseite des Leitrohrs 17 und der Innenseite der Wandung 8 gebildete ringförmige Kanal einen Reaktionskanal 26, der von der Frischluft und dem Brennstoff in Richtung der Pfeile 27, 28 durchlaufen wird.

Das Ende des Reaktionskanals 26 wird durch die Stirnwand 12 verdeckt, so dass sich die Strömung, die durch Pfeile 29, 31 angedeutet ist, umkehrt. Lediglich ein kleinerer Teil der entstandenen Reaktionsprodukte strömt als heißes Gas durch den Ausgang 7 zu der Turbine 5, wie Pfeile 32, 33 kenntlich machen. Der größere Teil rezirkuliert durch das Leitrohr 17 zu der Stirnwand 11 zurück, das somit einen Rezirkulationskanal 34 festlegt. Die in dem Rezirkulationskanal 34 rückströmenden Abgase haben Brennkammerausgangstemperatur, beispielsweise 1.300°C. Der Massenstrom beträgt das Zwei- bis Fünffache des Zuluftmassenstroms der durch den Eingang 6 zuströmt.

An der Stirnwand 11 werden die rückströmenden Gase radial umgelenkt und von der zuströmenden Frischluft mit einem Injektoreffekt in den Reaktionskanal 26 eingesaugt. Hier vermischen sich die heißen Abgase mit der zuströmenden Frischluft. Die Mischungstemperatur liegt oberhalb der Entzündungstemperatur des zugeführten Brennstoffs, beispielsweise oberhalb von 720°C. Der mit der Frischluft zugeführte Brennstoff oxidiert deshalb etwa auf der Länge des Leitrohrs 17 innerhalb des Reaktionskanals 26 ohne Ausbildung von Flammenerscheinungen vollständig. Es entstehen keine lokalen Temperaturspitzen innerhalb des Gasvolumens.

Nach Aufheizen der Brennkammer 8 und Aufnahme des beschriebenen stabilen flammenlosen Betriebs, kann die Vorwärmeinrichtung 22 abgeschaltet werden. Die flammenlose Oxidation kann in Voll- und Teillastbetrieb aufrecht erhalten werden, solange sichergestellt bleibt, dass die Brennkammer 8 insgesamt auf einer Temperatur oberhalb der Entzündungstemperatur des Brennstoffs gehalten wird und solange das veranschaulichte Strömungsmuster aufrecht erhalten wird. Bei diesem bildet das Leitrohr 17 das flächenhafte Wirbelzentrum der sich ausbildenden großräumigen Rezirkulationsströmung, die reifen- oder thorusförmig verläuft. Das Wirbelzentrum ist somit stabil koaxial zu der Mittelachse 14 lokalisiert.

Bei einer in Figur 5 veranschaulichten alternativen Ausführungsform der Brennkammer 5 wird die Zirkulationsströmung allein durch die Anordnung der Luftdüsen 15 auf den aus Figur 4 ersichtlichen Kranz, die Ausbildung und Anordnung der Öffnung 14 und gegebenenfalls durch die Formgebung der Wandung 8 erreicht. Der Rezirkulationskanal 34 und der Reaktionskanal 26 sind hier nicht durch gegenständliche Einbauten voneinander getrennt sondern werden durch die sich ausbildende Strömung festgelegt. Das Wirbelzentrum der Rezirkulationsströmung ist in Figur 5 gestrichelt bei 35 angedeutet. Es liegt konzentrisch zu der Mittelachse 16.

Bei einer weiter entwickelten Ausführungsform ist an dem Ausgang 7 ein Hochtemperaturkatalysator angeordnet. Dieser dient der Reaktionsbeschleunigung insbesondere in unteren Temperaturbereichen.

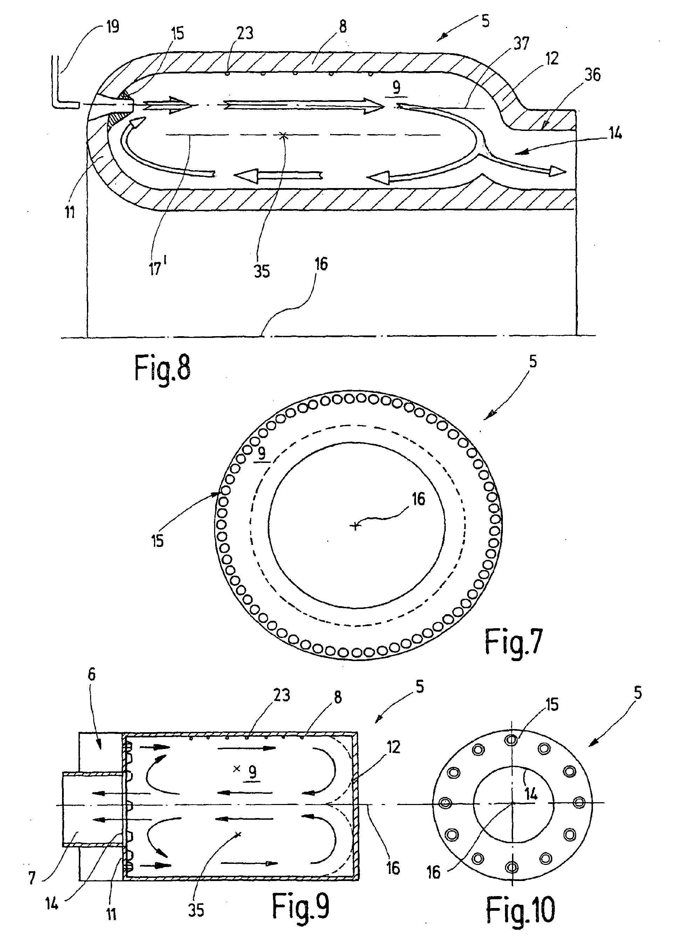

In Figur 7 und 8 ist eine abgewandelte Brennkammer 5 veranschaulicht. Diese ist als Ringbrennkammer ausgebildet. Soweit bislang eingeführte Bezugszeichen verwendet sind, gilt die vorige Beschreibung entsprechend. Die nachfolgenden Erläuterungen gelten ergänzend.

Die Brennkammer 5 weist einen ringförmigen Innenraum 9 auf, der konzentrisch zu der Längsmittelachse 16 angeordnet und sowohl zu der Mittelachse 16 hin als auch nach außen hin von der Wandung 8 umschlossen ist. Diese kann, wie Figur 8 andeutet, mit strömungstechnisch günstiger Krümmung in die Stirnwände 11, 12 übergehen. In der Stirnwand 11 sind Luftdüsen 15 angeordnet, die auf einem zu der Mittelachse 16 konzentrischen Kreis liegen (Figur 7). Die von den Luftdüsen 15 festgelegte Strömungsrichtung ist im Wesentlichen parallel zu der Mittelachse 16. Die Stirnwand 12 kann mit einer ringschlitzförmigen Öffnung 14 oder anstelle dessen mit einer Serie auf einem Kranz angeordneter Einzelöffnungen 14 versehen sein. Die äußere Kränze, d.h. die am weitesten radial außen liegende Begrenzung 36 ist radial so weit innen angeordnet, dass der aus der Luftdüse 15 austretende Luftstrahl radial weiter außen auf die Stirnwand 12 trifft. Mit anderen Worten, wie bei den vorigen Ausführungsformen schneidet die gedachte linienhafte Verlängerung 37 der Luftdüse 15 die Stirnwand 12 außerhalb der Öffnung 14. Entsprechend wird die aus der Luftdüse 15 austretende Strömung vor dem Ausgang 7 um 180° umgeleitet und strömt zum größeren Teil zu der Stirnwand 11 zurück, wo sie wiederum um 180° umgeleitet wird. Es bildet sich eine großräumige Umlaufströmung aus, die auf ihrer gesamten Länge an der Wandung 8 der Brennkammer 5 entlang führt. Das Wirbelzentrum 35 ist konzentrisch zu der Mittelachse 16 angeordnet. Es führt etwa mittig durch den Innenraum 9. Es kann, wie gestrichelt angedeutet ist, durch eine Leiteinrichtung 17' oder auch lediglich durch die Form der Wandung 8 festgelegt sein. Wie bei den vorigen Ausführungsformen findet eine flammenlose Oxidation mit vollständiger Reaktion zwischen dem Brennstoff und der zugeführten Frischluft auf dem Weg von der Luftdüse zu der Stirnwand 12 statt, so dass lediglich Abgase rezirkuliert werden.

Eine weitere Ausführungsform der erfindungsgemäßen Brennkammer 5 ist aus den Figuren 9 und 10 ersichtlich. Die zu den Brennkammern gemäß Figur 3 bis 5 getroffenen Ausführungen gelten entsprechend. Ergänzend gilt nachfolgendes:

Die Brennkammer 5 nach Figur 9 arbeitet mit Umkehrströmung. Während bei den vorstehenden Brennkammern der Eingang 6 und der Eingang 7 an einander gegenüber liegenden Stirnseiten 11, 12 der Brennkammer 5 angeordnet sind, sind der Eingang 6 und der Ausgang 7 bei der Brennkammer 5 nach Figur 9 an ein und derselben Stirnseite 11 der Brennkammer 5 angeordnet. Diese Bauform eignet sich beispielsweise für Turbinen kleinerer Leistung. Sie ist typischerweise bei Turbinen mit Radialverdichter einsetzbar. Die Luftdüsen 15 sind auf einem Kreis angeordnet, der die hier in der Stirnwand 11 vorgesehene Öffnung 14 umgibt. Die Luftdüsen 15 und die Öffnung 14 sind konzentrisch zu der Mittelachse 16 angeordnet. Die sich ausbildende Umlaufströmung (Pfeile in Figur 9) weist wiederum um ringförmiges konzentrisch zu der Mittelachse 16 gelegenes Zirkulationszentrum 35 auf. Die Zirkulationsströmung weist einen Massenstrom auf, der dem Massenstrom der zugeführten Frischluft um das Zwei- bis Fünffache übertrifft.

Im Vergleich mit den vorstehend beschriebenen Ausführungsformen besteht der Vorzug dieser Ausführungsform der Brennkammer 5 darin, dass nahezu der gesamte Innenraum 9 als Reaktionsraum genutzt wird. Sowohl der Weg von der Luftdüse zu der Stirnwand 12 als auch der Weg von der Stirnwand 12 zu dem Ausgang 14 kann für die Reaktion des Brennstoffs genutzt werden. Damit ist eine sehr kompakte Bauform möglich.

Bedarfsweise kann das Zentrum 35 durch ein Leitrohr 17 festgelegt oder stabilisiert werden. Außerdem kann die Stirnwand 12, wie in Figur 9 gestrichelt veranschaulicht ist, thorusförmig gekrümmt, d.h. als um die Mittelachse 16 herumführende Rinne ausgebildet sein.

Eine für eine Gasturbine eingerichtete Brennkammer 5 ist zur flammenlosen Oxidation von Brennstoffen eingerichtet. Dazu weist sie einen Innenraum 9 auf, in dem sich eine großräumige Rezirkulationsströmung einstellt. Diese führt der eingeleiteten Luft einen heißen Abgasstrom zu, dessen Massenstrom den Frischluftstrom übersteigt. Die Frischluft und der Brennstoff werden der Brennkammer in gleicher Richtung ungefähr wandparallel zugeführt.

## Patentansprüche

1. Gasturbine mit einem Verdichter (2), einer Turbine (3) und mit wenigstens einer zu einer Mittelachse konzentrischen Brennkammer (5) zur flammlosen Oxidation von Brennstoff, die ein insgesamt von einer sich ausbildenden Umlaufströmung erfasstes Innenvolumen (9) umschließt, und die einen eine Lufteingangsrichtung (24,25) festlegenden Eingang (6,15), der an den Verdichter (2) angeschlossen ist, einen Ausgang (7,14), der an die Turbine (3) angeschlossen ist und eine Brennstoffzuführungseinrichtung (18) aufweist, die eine Brennstoffeinleitungsrichtung (24,25) festlegt **dadurch gekennzeichnet, dass** der Eingang (6, 15) mehrere Luftdüsen umfasst wobei die Brennstoffzuführungseinrichtung mehrere Brennstoffdüsen umfasst, und wobei die Brennstoffdüsen (19) die Brennstoffeinleitungsrichtung (24,25) und die Luftdüsen (15) die Lufteingangsrichtung (24,25) im Wesentlichen übereinstimmend festlegen und mit einem Radius (A) zur Mittelachse (16) der Brennkammer (5) angeordnet sind, der größer ist, als der Radius der Öffnung (14), die den Ausgang (7) bildet.

2. Gasturbine nach Anspruch 1, **dadurch gekennzeichnet, dass** die Querschnitte des Eingangs (6, 15) und des Ausgangs (7, 14) und die Geometrie des Innenraums (9) der Brennkammer (5) derart aufeinander abgestimmt sind, dass der Massenstrom des in dem Innenraum umlaufenden Gasstroms größer als das Doppelte des Massenstroms des in den Eingang (6, 15) geleiteten Massenstroms ist.

3. Gasturbine nach Anspruch 1, **dadurch gekennzeichnet, dass** die Querschnitte des Eingangs (6, 15) und des Ausgangs (7, 14) und die Geometrie des Innenraums (9) der Brennkammer (5) derart aufeinander abgestimmt sind, dass der Massenstrom des in dem Innenraum umlaufenden Gasstroms kleiner als das Fünffache des Massenstroms des in den Eingang (6, 15) geleiteten Massenstroms ist.

4. Gasturbine nach Anspruch 1, **dadurch gekennzeichnet, dass** der Eingang (6, 15) mehrere Luftdüsen (15) umfasst, die in einer Reihe nebeneinander angeordnet sind.

5. Gasturbine nach Anspruch 4, **dadurch gekennzeichnet, dass** jede Luftdüse (15) einen über die Wandung (11) vorstehenden Abschnitt aufweist.

6. Gasturbine nach Anspruch 4, **dadurch gekennzeichnet, dass** die Luftdüsen (15) eine übereinstimmende Ausrichtung aufweisen.

7. Gasturbine nach Anspruch 1, **dadurch gekennzeichnet, dass** die Brennkammer (5) zylindrisch ausgebildet ist und dass die Luftdüsen (15) auf einem Kreis angeordnet sind, der konzentrisch zu der Brennkammer (5) angeordnet ist.

8. Gasturbine nach Anspruch 1, **dadurch gekennzeichnet, dass** die Brennkammer (5) kreisringförmig ausgebildet ist.

9. Gasturbine nach Anspruch 1, **dadurch gekennzeichnet, dass** die Rezirkulationsströmung lediglich ein einziges Wirbelzentrum (35) aufweist.

10. Gasturbine nach Anspruch 9, **dadurch gekennzeichnet, dass** das Wirbelzentrum (35) auf einer gekrümmten Linie oder Fläche liegt.

11. Gasturbine nach Anspruch 1, **dadurch gekennzeichnet, dass** die Brennkammer (5) eine Vorheizeinrichtung (22) aufweist.

12. Gasturbine nach Anspruch 1, **dadurch gekennzeichnet, dass** in dem Innenraum (9) eine Leiteinrichtung (17) angeordnet ist, die den Innenraum (9) in einen Misch- und Reaktionskanal (26) und einen Rückströmkanal (34) unterteilt.

## Claims

1. Gas turbine with a compressor (2), a turbine (3) and with at least one combustion chamber (5) concentric to a centre axis for the flameless oxidation of fuel, which encloses an inside space (9) encompassed overall by a developing circulatory flow, and which has an inlet (6, 15) that defines an air entry direction (24, 25) and is connected to the compressor (2), an outlet (7, 14) connected to the turbine (3) and a fuel supply device (18), which defines a fuel feed direction (24, 25), **characterised in that** the inlet (6, 15) comprises multiple air nozzles, wherein the fuel supply device comprises multiple fuel nozzles and wherein the fuel nozzles (19) define the fuel feed direction (24, 25) and the air nozzles (15) define the air entry direction (24, 25) in a substantially consistent manner and are arranged with a radius (A) to the centre axis (16) of the combustion chamber (5), which is larger than the radius of the opening (14) that forms the outlet (7).

2. Gas turbine according to claim 1, **characterised in that** the cross-sections of the inlet (6, 15) and the outlet (7, 14) and the geometry of the inside space (9) of the combustion chamber (5) are coordinated to one another in such a manner that the mass flow rate of the gas flow circulating in the inside space is more than double the mass flow rate of the mass flow directed into the inlet (6, 15).

3. Gas turbine according to claim 1, **characterised in that** the cross-sections of the inlet (6, 15) and the outlet (7, 14) and the geometry of the inside space (9) of the combustion chamber (5) are coordinated to one another in such a manner that the mass flow rate of the gas flow circulating in the inside space is less than five-times the mass flow rate of the mass flow directed into the inlet (6, 15).

4. Gas turbine according to claim 1, **characterised in that** the inlet (6, 15) comprises multiple air nozzles (15), which are arranged in a row next to one another.

5. Gas turbine according to claim 4, **characterised in that** each air nozzle (15) has a section projecting over the wall (11).

6. Gas turbine according to claim 4, **characterised in that** the air nozzles (15) have a corresponding orientation.

7. Gas turbine according to claim 1, **characterised in that** the combustion chamber (5) is cylindrical in configuration, and that the air nozzles (15) are arranged on a circle, which is arranged concentrically to the combustion chamber (5).

8. Gas turbine according to claim 1, **characterised in that** the combustion chamber (5) is configured in the shape of a circular ring.

9. Gas turbine according to claim 1, **characterised in that** the recirculation flow has only one single turbulent flow centre (35).

10. Gas turbine according to claim 9, **characterised in that** the turbulent flow centre (35) lies on a curved line or surface.

11. Gas turbine according to claim 1, **characterised in that** the combustion chamber (5) has a preheating device (22).

12. Gas turbine according to claim 1, **characterised in that** a guide device (17), which divides the inside space (9) into a mixing and reaction conduit (26) and a backflow conduit (34), is arranged in the inside space (9).

## Revendications

1. Turbine à gaz, comprenant un compresseur (2), une turbine (3) et au moins une chambre de combustion (5), concentrique à un axe médian, qui est destinée à l'oxydation sans flamme d'un combustible et entoure un volume interne (9) globalement parcouru par un écoulement de circulation qui se forme, et qui présente une entrée (6, 15) définissant un sens d'admission d'air (24, 25) et raccordée au compresseur (2), une sortie (7, 14) qui est raccordée à la turbine (3), et un dispositif d'alimentation en combustible (18) qui définit un sens d'introduction de combustible (24, 25), **caractérisée en ce que** l'entrée (6, 15) comprend plusieurs buses d'air, sachant que le dispositif d'alimentation en combustible comporte plusieurs buses de combustible, et sachant que les buses de combustible (19) définissent le sens d'introduction de combustible (24, 25), et les buses d'air (15) définissent le sens d'admission d'air (24, 25), sensiblement de façon concordante, et sont disposées avec un rayon (A) par rapport à l'axe médian (16) de la chambre de combustion (5), qui est plus grand que le rayon de l'ouverture (14) qui forme la sortie (7).

2. Turbine à gaz selon la revendication 1, **caractérisée en ce que** les sections transversales de l'entrée (6, 15) et de la sortie (7, 14) et la géométrie du volume interne (9) de la chambre de combustion (5) sont adaptées les unes aux autres de manière telle que le flux massique du flux de gaz circulant dans le volume interne soit supérieur au double du flux massique du flux massique introduit dans l'entrée (6, 15).

3. Turbine à gaz selon la revendication 1, **caractérisée en ce que** les sections transversales de l'entrée (6, 15) et de la sortie (7, 14) et la géométrie du volume interne (9) de la chambre de combustion (5) sont adaptées les unes aux autres de manière telle que le flux massique du flux de gaz circulant dans le volume interne soit inférieur à cinq fois le flux massique du flux massique introduit dans l'entrée (6, 15).

4. Turbine à gaz selon la revendication 1, **caractérisée en ce que** l'entrée (6, 15) comporte plusieurs buses d'air (15) qui sont disposées en une rangée les unes à côté des autres.

5. Turbine à gaz selon la revendication 4, **caractérisée en ce que** chaque buse d'air (15) présente une partie qui dépasse par rapport à la paroi (11).

6. Turbine à gaz selon la revendication 4, **caractérisée en ce que** les buses d'air (15) présentent une orientation concordante.

7. Turbine à gaz selon la revendication 1, **caractérisée en ce que** la chambre de combustion (5) est réalisée sous une forme cylindrique et **en ce que** les buses d'air (15) sont arrangées sur un cercle qui est disposé de façon concentrique par rapport à la chambre de combustion (5).

8. Turbine à gaz selon la revendication 1, **caractérisée en ce que** la chambre de combustion (5) est réalisée sous une forme annulaire.

9. Turbine à gaz selon la revendication 1, **caractérisée en ce que** le flux de recirculation présente un seul centre de tourbillon (35).

10. Turbine à gaz selon la revendication 9, **caractérisée en ce que** le centre de tourbillon (35) se situe sur une ligne ou une surface courbes.

11. Turbine à gaz selon la revendication 1, **caractérisée en ce que** la chambre de combustion (5) présente un dispositif de préchauffage (22).

12. Turbine à gaz selon la revendication 1, **caractérisée en ce qu'**il est prévu, dans le volume interne (9), un dispositif de guidage (17) qui divise le volume interne (9) en un conduit de mélange et de réaction (26) et un conduit de retour (34).
